# DEMANDE DE BREVET EUROPEEN

(11) **EP 2 813 387 A1**
(43) Date de publication de la demande: **17.12.2014**
(21) Numéro de dépôt: 14170293.6
(22) Date de dépôt: 28.05.2014
(51) Int. Cl.: B60K 5/12, F16C 7/04, F16F 7/12

(54) **Biellette de liaison entre deux organes mobiles**

(30) Priorité: 14.06.2013 FR 1355571
(71) Demandeur: PEUGEOT CITROËN AUTOMOBILES SA, 78140 Velizy-Villacoublay (FR)
(72) Inventeur: Mandra, YANNICK, 25230 SELONCOURT (FR); Lambert, SAMUEL, 25200 MONTBELIARD (FR)

(57) **Abrégé**

L'invention concerne une biellette de liaison (B) entre deux organes mobiles l'un par rapport à l'autre, en particulier entre un groupe motopropulseur et une caisse d'un véhicule automobile, cette biellette comprenant un corps (1) présentant un évidement dans lequel est disposé un insert (4) d'articulation relié audit corps par au moins une liaison élastique (2,3), le corps étant muni d'un premier logement (13) de réception d'un dispositif de fixation (6) destiné à être solidarisé à l'un des organes mobiles, et l'insert (4) étant muni d'un deuxième logement (48) de réception d'un autre dispositif de fixation destiné à être solidarisé au deuxième organe mobile. L'insert (4) présente une structure propre à se rompre progressivement lors de l'application d'un effort de compression de la biellette conduisant à un rapprochement des deux logements (48,13) avant rupture éventuelle du corps.

## Description

La présente invention concerne une biellette de liaison entre deux organes mobiles l'un par rapport à l'autre, ainsi qu'un véhicule, notamment automobile, pourvu d'au moins une telle biellette de liaison.

La biellette conforme à l'invention est destinée à être interposée, à des fins de limitation de débattement relatif et de filtrage de vibrations, entre les deux éléments mobiles précités. Elle est tout particulièrement, mais non exclusivement, destinée à être interposée entre le groupe motopropulseur (ci-après désigné par l'acronyme GMP par soucis de concision), d'un véhicule automobile et la caisse de celui-ci. Les organes mobiles, auxquels il est fait allusion ci-dessus, sont alors notamment ce GMP et cette caisse.

On connaît du brevet FR-2 903 158 une telle biellette de liaison qui possède un corps allongé dans lequel sont définis deux logements de réception d'arbres correspondants, dont l'un est solidarisé au groupe motopropulseur du véhicule et dont l'autre est solidarisé à la structure de ce dernier, et qui comprend des moyens de rupture programmée interposés entre lesdits logements. Ces moyens de rupture programmée sont destinés à se rompre lors de l'application d'un effort selon un axe longitudinal du corps de la biellette, de manière à autoriser le rapprochement entre les logements, afin d'absorber au moins une partie de l'énergie provoquée par un choc sur l'avant du véhicule. Cette biellette est susceptible d'amélioration, dans la mesure où le corps de la bielle se trouve sollicité et fragilisé, à la fois en usage normal et en cas de choc.

Il est également connu du brevet FR-2 976 864 une biellette à moyens de rupture programmés constitués d'une partie évidée de l'insert de la biellette. En cas de choc, le corps de la biellette est rompu, et la rupture tend à être brutale, ce qui n'est pas non plus pleinement satisfaisant.

Il s'avère souvent délicat, en effet, de concilier une tenue mécanique satisfaisante dans les conditions de roulage normales avec un comportement approprié en cas de choc, c'est-à-dire un comportement sans rupture brutale sous sollicitation qui entraîne un pic d'effort préjudiciable au comportement du véhicule avec une incidence, notamment, sur le niveau de décélération subi par les occupants de l'habitacle du véhicule.

Le but de l'invention est de concevoir une biellette de liaison, appelée aussi biellette anti-couple, qui soit améliorée. Il s'agit notamment de concevoir une biellette moins fragile et/ou et qui puisse absorber plus progressivement l'énergie générée lors d'un choc et/ou qui concilie un comportement mécanique satisfaisant en conditions de roulage normales et une meilleure absorption de l'énergie dégagée lors d'un choc subi par le véhicule.

L'invention a tout d'abord pour objet une biellette de liaison entre deux organes mobiles l'un par rapport à l'autre, en particulier entre un groupe motopropulseur et une caisse d'un véhicule automobile, cette biellette comprenant un corps présentant un évidement dans lequel est disposé un insert d'articulation relié audit corps par au moins une liaison élastique, le corps étant muni d'un premier logement de réception d'un dispositif de fixation destiné à être solidarisé à l'un des organes mobiles, et l'insert étant muni d'un deuxième logement de réception d'un autre dispositif de fixation destiné à être solidarisé au deuxième organe mobile. Selon l'invention, l'insert présente une structure propre à se rompre progressivement lors de l'application d'un effort de compression de la biellette conduisant à un rapprochement des deux logements avant rupture éventuelle du corps.

On comprend au sens de l'invention par « se rompre progressivement » le fait que la rupture se fait en plusieurs étapes, successivement, chaque étape correspondant à la rupture d'une partie distincte de l'insert.

On comprend par rapprochement des deux logements, le rapprochement et/ou la déformation de ceux-ci ou de l'un d'entre eux, entraînée par le déplacement des dispositifs de fixation qu'ils accueillent. C'est bien le mouvement relatif des dispositifs de fixation (vis, arbre, tout axe...) qui vient déformer, entraîner le mouvement des logements qui les reçoit.

La biellette selon l'invention présente donc une série d'avantages. D'une part, elle intègre une fonction de transmission d'efforts lors d'un choc, grâce à l'insert présentant une structure propre à se rompre progressivement lors de l'application du choc. L'effort lors du choc est maintenu sur la plage de compressibilité de l'insert, et l'absence de rupture brutale associée à la déformation de l'insert permet une dissipation de l'énergie favorable, sans pic d'effort. On maitrise ainsi le niveau de décélération subi par les occupants du véhicule. D'autre part, la compressibilité de l'insert est indépendante du corps sous sollicitation au choc, ce qui signifie que, jusqu'à un certain niveau de choc, seul l'insert se déformera/ se cassera, laissant le corps intact. On peut ainsi envisager, après un choc relativement peu important, de ne remplacer que l'insert et pas l'ensemble de la biellette. Enfin, cette biellette à insert ne remet pas en cause, par ailleurs, la tenue mécanique de la biellette en conditions de roulage normales.

De préférence, le corps de la biellette présente un axe longitudinal, l'insert est disposé selon cet axe longitudinal et présente au moins un évidement transversal, disposé substantiellement transversalement audit axe longitudinal.

De préférence, l'insert comprend au moins deux évidements transversaux, notamment au moins trois évidements transversaux.

Ces évidements peuvent être traversants ou non traversants.

Ces évidements peuvent déboucher les uns dans les autres, ou être séparés les uns des autres par des parois, cloisons.

Ils sont de préférence centrés sur l'axe longitudinal du corps de la biellette.

On comprend par « non traversant » dans l'ensemble du présent texte un évidement entièrement délimité par les parois du corps, qui garde un contour extérieur non modifié par la présence du ou des évidements au niveau de ses parois latérales.

De préférence encore, ces évidements transversaux sont centrés sur l'axe longitudinal du corps et en regard du deuxième logement de réception du deuxième dispositif de fixation également centré sur l'axe longitudinal du corps. Avec cette configuration, en cas de choc, le dispositif de fixation reçu dans le logement va se déplacer d'un évidement à l'autre en se rapprochant de l'autre dispositif de fixation reçu dans l'autre logement, avec absorption progressive de l'énergie dégagée lors du choc au fur et à mesure que le dispositif de fixation vient rompre successivement les parois de ces évidements disposés parallèlement les uns aux autres.

Avantageusement, selon un mode de réalisation, l'insert présente une pluralité d'évidements transversaux, notamment non traversants, disposés substantiellement transversalement à l'axe longitudinal du corps, les évidements étant traversés par un évidement longitudinal disposé selon l'axe longitudinal du corps.

L'évidement longitudinal traverse de préférence les évidements transversaux en leur milieu. Et il se trouve en regard du deuxième logement de réception du deuxième dispositif de fixation.

De préférence, l'évidement longitudinal, notamment non traversant, peut prolonger à l'une de ses extrémités pour déboucher dans le deuxième logement de réception du deuxième dispositif de fixation. Il vient ainsi, en quelque sorte, servir de moyen de guidage lors du déplacement du dispositif de fixation dans l'insert lors d'un choc.

De préférence, il peut aussi déboucher à l'autre de ses extrémités au niveau de l'extrémité longitudinale de l'insert la plus proche.

Avantageusement, le dispositif de fixation est optionnellement prolongé par un appendice comprenant une portion disposée dans l'évidement longitudinal et une portion dans l'évidement transversal le plus proche du deuxième logement de réception. Là encore, il s'agit de favoriser et de guider /maîtriser le déplacement du dispositif de fixation selon l'axe longitudinal du corps, dans l'insert, au travers de son évidement aligné selon cet axe.

De préférence, la portion d'appendice disposée dans l'évidement transversal présente une forme proche de ou complémentaire audit évidement, avec notamment un profil arqué. Ce « premier » évidement, c'est-à-dire celui le plus proche du logement de réception du dispositif de fixation, peut avoir un profil un peu différent des autres : généralement, les évidements transversaux sont sensiblement de forme parallélépipédique (section rectangulaire dans le plan transversal de la biellette), mais le premier peut avoir une forme arquée complémentaire de celle de l'appendice, que celui-ci soit présent ou non, avec une concavité tournée vers le logement de réception.

Selon un autre mode de réalisation, l'insert présente des évidements traversants sur la hauteur de l'insert, qui sont jointifs et disposés en chicane les uns par rapport aux autres, notamment en regard du deuxième logement de réception du deuxième dispositif de fixation centré sur l'axe longitudinal du corps. Ces évidements sont de préférence substantiellement disposés alternativement de part et d'autre de l'axe longitudinal du corps, celui le plus proche du logement de réception du dispositif de fixation pouvant cependant.

Selon un autre mode de réalisation, l'insert présente des évidements traversants sur la hauteur de l'insert, formant entre eux des croisillons, notamment en regard du deuxième logement de réception du deuxième dispositif de fixation centré sur l'axe longitudinal du corps.

Avantageusement, l'insert peut présenter, à au moins de ses extrémités longitudinales, un profil présentant deux pieds saillants selon l'axe longitudinal du corps et délimitant entre eux une zone en retrait accueillant éventuellement une butée. En compression, seuls les pieds de l'une des extrémités de l'insert sont utiles, en déportant le passage de l'effort entre l'insert et le corps en dehors de la zone éventuelle de rupture progressive optionnelle du corps de la biellette, dès lors que l'effort est insuffisant pour faire céder l'insert. La conception de l'autre extrémité longitudinale de l'insert et de la butée (qui ne sont pas sollicitées en compression) est libre. Mais elle peut prendre une forme identique ou similaire, c'est-à-dire avec des pieds définissant une zone de retrait, si on prend en compte aussi les efforts en traction de la biellette. On peut aussi prévoir non pas une mais plusieurs butées alignées dans la zone de retrait, ou encore rapporter la butée non pas sur l'insert, mais sur la zone en regard du corps.

Selon une variante, le corps de la biellette comprend également au moins une zone propre à se rompre progressivement lors de l'application d'un effort de compression, qui est localisée en regard d'au moins une extrémité longitudinale de l'insert, et qui s'étend uniquement en regard de la zone en retrait de l'insert accueillant la butée sur une largeur mesurée transversalement à l'axe longitudinal du corps qui est inférieure à la largeur de ladite zone en retrait.

Cette zone de rupture progressive dans le corps cette fois peut prendre la même forme que celle de l'insert, à savoir des évidements transversaux reliés par un évidement longitudinal, des ouvertures en chicanes ou en forme de croisillons. La localiser en regard de l'insert, mais avec un dimensionnement et un positionnement tels qu'elle ne se trouve pas en regard des « pieds » de l'insert est particulièrement avantageux : on s'assure ainsi que l'effort subi par l'insert dans sa zone de rupture progressive ne vient pas se propager directement dans une zone volontairement fragilisée mécaniquement du corps lui-même. Ainsi, jusqu'à un niveau élevé d'effort de compression par choc, seul l'insert est impacté. Ce n'est qu'à des niveaux très élevés d'effort que l'effort peut être repris et absorbé par la zone de rupture progressive du corps lui-même : Sous la sollicitation due au choc et si la plage de compressibilité l'exige, la rupture progressive de l'insert peut se propager dans le corps par l'intermédiaire du dispositif de fixation qui continue sa course dans le corps lui-même, en provoquant alors la déformation ou la rupture de cette zone du corps dédiée.

Selon une variante, le corps de biellette peut comprendre deux composants, le premier composant étant muni d'un premier logement de réception d'un dispositif de fixation destiné à être solidarisé à l'un des organes mobiles et comprenant une forme en mâchoire dans l'entrefer de laquelle est monté le second composant présentant un évidement dans lequel est disposé l'insert d'articulation relié au corps du second composant par au moins une liaison élastique, l'insert étant muni du deuxième logement de réception de l'autre dispositif de fixation destiné à être solidarisé au deuxième organe mobile.

Selon une autre variante, la biellette selon l'invention peut comprendre un corps présentant deux évidements, un insert étant disposé dans chacun des évidements, les deux inserts étant en regard l'un de l'autre, l'un des inserts insert étant muni du premier logement de réception du dispositif de fixation destiné à être solidarisé à l'un des organes mobiles, et l'autre insert étant muni du deuxième logement de réception d'un autre dispositif de fixation destiné à être solidarisé au deuxième organe mobile. De préférence, les deux inserts sont alignés sur l'axe X-X longitudinal du corps.

De préférence, l'insert peut être choisi en un matériau plus résistant mécaniquement que le corps de la biellette. Cependant, ce choix n'est pas indispensable, car la tenue mécanique résulte de la combinaison entre la forme et le dimensionnement des composants et la nature des matériaux qui les constituent. L'insert doit de préférence commencer à céder avant le corps, mais avec une rupture progressive pour dissiper de l'énergie. Le matériau de l'insert doit autoriser de préférence un taux de déformation plastique (allongement) avant rupture totale plus important que ce qui serait requis pour le corps. Ce dernier peut être dans un matériau plus cassant (matériau ductile avec peu de déformation plastique avant rupture) sans que cela soit gênant, dès lors que sa rupture intervient à un niveau d'effort plus important. Pour la variante qui consiste à prolonger la rupture de l'insert dans une zone volontairement fragilisée mécaniquement du corps, le matériau de ce dernier doit lui aussi présenter de préférence un taux de déformation plastique avant rupture totale suffisant pour obtenir une rupture progressive.

L'invention a également pour objet le véhicule, par exemple du type automobile, comprenant une caisse, un groupe motopropulseur, ainsi qu'au moins une biellette de liaison, reliant cette caisse et ce groupe motopropulseur, la ou chaque biellette de liaison étant celle décrite précédemment.

L'invention va être décrite ci-après avec des modes de réalisation de biellettes, en référence aux dessins annexés, donnés uniquement à titre d'exemples non limitatifs, dans lesquels :
- les figures 1 et 2 sont des vues respectivement de dessus et en perspective, d'un insert selon un premier mode de réalisation d'un premier exemple de biellette selon l'invention ;
- la figure 3 est une vue en perspective du premier exemple de biellette avec l'insert selon les figures 1 et 2 ;
- les figures 4a et 4b sont respectivement un deuxième et un troisième mode de réalisation d'insert pour une biellette selon l'invention ;
- les figures 5a, 5b et 5c illustrent différentes étapes de la déformation de l'insert du premier exemple de biellette lors d'un choc longitudinal ;
- la figure 6 est un graphe schématique montrant l'évolution de l'effort appliqué à la biellette lors d'un choc selon la variation de distance entre les deux dispositifs de fixation aux organes mobiles qu'elle relie ;
- les figures 6a, 6b représentent un deuxième exemple de biellette selon l'invention ;
- les figures 7a, 7b représentent un troisième exemple de biellette selon l'invention.

Ces figures sont très schématiques, et ne seront détaillées que les caractéristiques nécessaires à la compréhension de l'invention. Les références gardent la même signification d'une figure à l'autre.

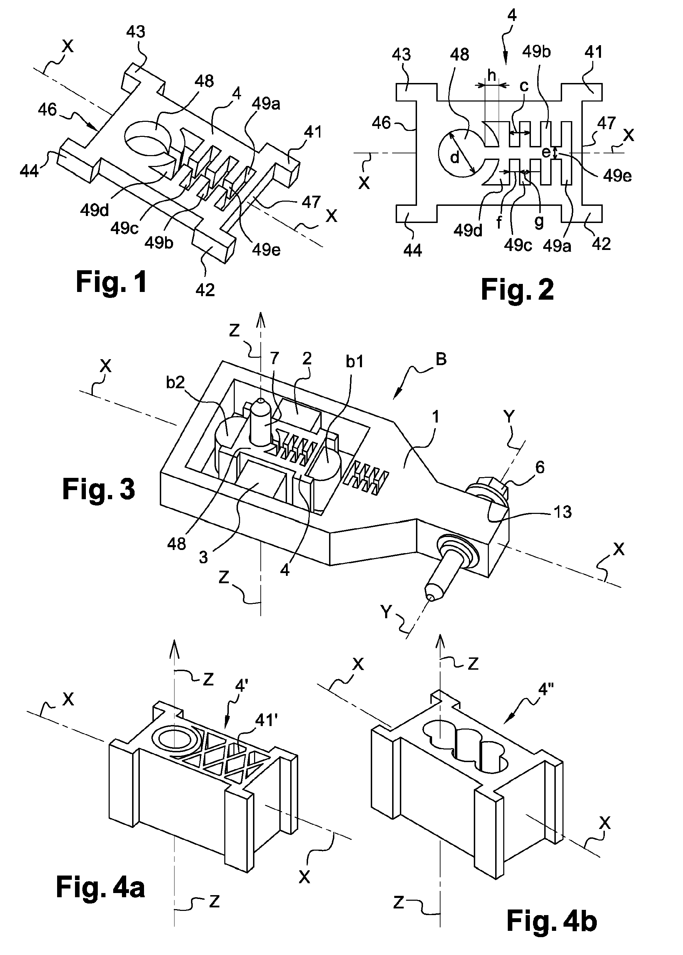

La biellette de liaison B selon le premier exemple est illustrée à la figure 3 : Elle comprend un corps allongé 1, réalisé en un matériau plastique ou en métal, par exemple en tôle, permettant d'assurer la contrainte de tenue aux efforts de l'ensemble de la biellette. On note X-X l'axe principal du corps 1. La biellette comprend aussi une ou deux, ici deux, liaisons élastiques 2,3 en élastomère assurant la liaison entre un insert 4 et le corps 1, elles ont pour rôle d'absorber l'énergie vibratoire liée au fonctionnement normal de l'un des organes mobiles. L'ensemble des liaisons 2,3 peut être désigné sous le terme d'articulation élastique.

La biellette B est destinée à être reliée à la caisse du véhicule et à l'organe vibrant, ici le GMP, à isoler par l'intermédiaire de dispositifs de fixation 6,7 dont les axes peuvent être parallèles entre eux, ou perpendiculaires entre eux. Dans l'exemple représenté, les axes sont perpendiculaires entre eux, avec l'axe Y-Y du dispositif 6 qui est perpendiculaire à l'axe XX dans le plan du corps 1 et l'axe Z-Z du dispositif 7 qui est perpendiculaire aux axes X-X et Y-Y, et qui, tel que représenté à la figure, est vertical.

Le corps 1 présente une portion sensiblement parallélépipédique contenant l'évidement logeant l'insert 4, et une portion de moindre largeur selon l'axe Y-Y qui comprend un autre logement 13 sensiblement cylindrique comme le logement 48 de l'insert et destiné à loger le dispositif de fixation 6.

L'insert 4 présente la particularité d'être conçu de façon à rompre progressivement lorsque la biellette B est soumise à une sollicitation en compression lors d'un choc subi par le véhicule, notamment d'un choc longitudinal en X-X. Il est décrit plus en détails aux figures 1 et 2 : il est en un matériau par exemple plus résistant mécaniquement, notamment du point de vue allongement à la rupture, que le matériau du corps 1, il est par exemple en métal du type aluminium extrudé afin de disposer d'un allongement à la rupture suffisant pour éviter la rupture brutale et dissiper ainsi de l'énergie lors de la phase de compression en cas de choc. Il présente une symétrie longitudinale par rapport à l'axe X-X. Il comprend à ses extrémités longitudinales deux pieds 41,42 et 43,44 qui délimitent deux zones en retrait 46,47 destinées à recevoir des butées élastiques avant et arrière (représentées aux figures suivantes sous les références b1 et b2). Il présente un logement de réception 48 circulaire pour recevoir le dispositif de fixation 7. Selon l'invention, il présente également une zone de rupture progressive qui comporte quatre (nombre à titre d'exemple) évidements 49 a,b,c,d transversaux à l'axe X-X, non traversants et reliés en leur milieu par un évidement longitudinal 49 e qui est centré sur l'axe X-X, et qui débouche dans le logement 48. Le nombre d'évidements peut être différent de quatre, soit être inférieur, soit être supérieur. Il peut par exemple être compris entre 2 et 10. L'évidement 49d le plus proche du logement 48 a une forme un peu différente des trois autres : au lieu de définir un évidement sensiblement parallépipédique, il présente une face tournée vers les autres évidements transversaux qui est plane, et une face tournée vers le logement qui est concave (selon une portion de cylindre qui serait centré sur le centre du logement lui-même cylindrique 48, afin de préserver une surface d'appui suffisante autour du logement 48 en cas d'assemblage vissé assuré par l'élément de fixation 7, par exemple, une vis comme représentée à la figure). Alternativement, cet évidement 49d pourrait, comme les autres, être de forme parallélépipédique. Pour donner un ordre de grandeur du dimensionnement de l'insert, et de façon non limitative : - le diamètre d du logement 48 peut être compris entre 10 à 15 mm, notamment être égal à 12 mm, - la distance g entre chaque évidement transversal, la distance f correspondant à la largeur de chacun des évidements 49a,49b,49c, la distance h correspondant à la distance entre le logement 48 et le premier évidement transversal 49d, et la distance e correspondant à la largeur de l'évidement longitudinal 49 e sont voisines et de l'ordre de 2 à 5 mm, par exemple d'environ 3 mm. La distance c d'un évidement transversal à un autre étant égal substantiellement égal au double de cette valeur.

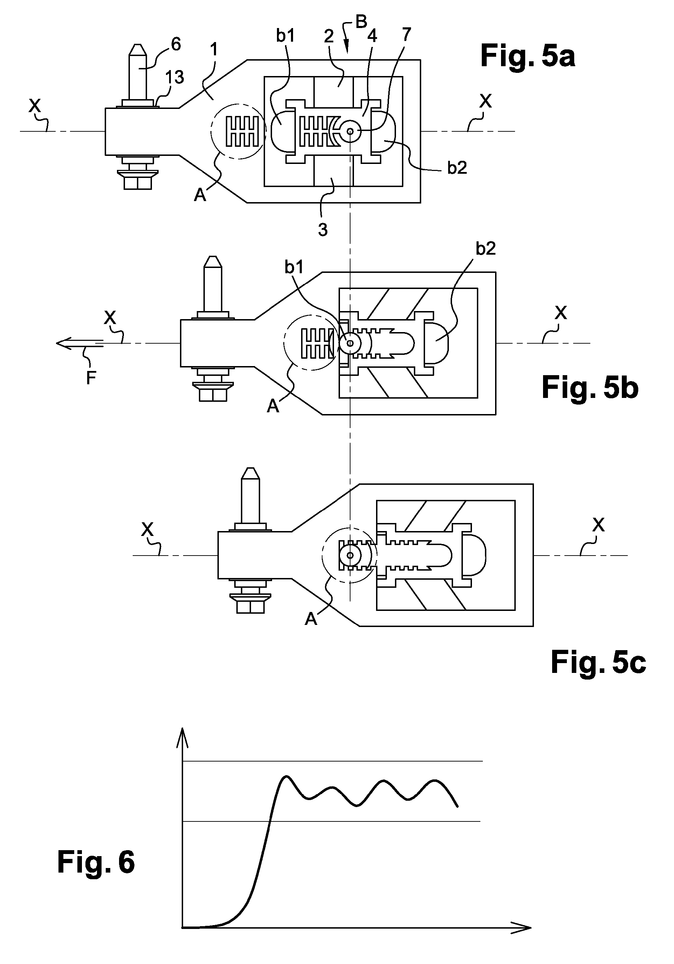

Les figures 5a, b, c représentent différents stades de déformation de la biellette selon la figure 3 en cas de choc subi par le véhicule selon l'axe X-X.

A la figure 5a, l'insert 4 est représenté sans sollicitation, les liaisons élastiques sont au repos, on voit que l'insert est muni de butées avant et arrière b1, b2, disposées dans les zones en retrait 46,47 de l'insert 4 : en conditions normales de roulage, l'insert va de déplacer selon l'axe X-X notamment lors des accélérations/décélérations, les liaisons 2,3 élastiques accompagnant son mouvement. On voit également que le corps 1 de la biellette comprend aussi une zone de rupture programmée, référencée par la lettre A, et qui comprend également une série de quatre (nombre à titre d'exemple) évidements transversaux de forme sensiblement parallélépipédique reliés par un évidement central longitudinal, qui se trouve en regard de la zone 47 de la biellette, mais dimensionnée de façon à ce que sa largeur soit inférieure à celle de cette zone : la zone A du corps de dépasse pas, selon l'axe Y-Y, cette zone 47. En effet, il est souhaitable qu'elle ne soit pas en regard des pieds 43,44 ou 41,42 qui lui sont directement en vis-à-vis. (Peu importe le positionnement de cette zone A par rapport aux pieds de l'insert situés à l'autre extrémité de celui-ci), de façon à ce que l'effort subi par l'insert soit transmis au corps 1 par les pieds de l'insert, au-delà de la zone A fragilisée mécaniquement qui ne sera pas sollicitée par l'élément de fixation 7 sans la rupture au préalable de l'insert 4.

Selon une variante non représentée aux figures, on peut également faire déboucher l'évidement 49e dans la zone de l'extrémité longitudinale 47 de l'insert 4, si la conception et les contraintes de fabrication de la butée b1 le permettent. Dans ce cas, on peut diviser en deux la butée b1 de part et d'autre de l'évidement 49e, ou alors inverser le positionnement de la butée en la rendant solidaire du corps de biellette 1 et non de l'insert 4.

La figure 5b représente le déplacement du dispositif de fixation 7 se rapprochant du dispositif de fixation 6 sous l'effet d'un choc selon l'axe X-X : le dispositif de fixation (vis/arbre) a rompu les uns après les autres les évidements transversaux 49d à 49a, les articulations élastiques sont sollicitées. Lors du choc axial, matérialisé par la flèche F, la biellette est soumise à un effort de compression selon son axe principal. Si cet effort présente une intensité particulièrement élevée, les articulations 2 se déforment, la butée b1 est complètement comprimée contre la face en regard de l'évidement du corps 1 de la biellette. Toute l'énergie du choc a été dissipée progressivement lors de la rupture progressive de l'insert, le corps 1 reste intact.

La figure 5c représente la position finale des mêmes composants sous l'effet d'un choc plus violent. Dans ce cas de figure, la rupture progressive de l'insert 4 s'est propagée dans le corps en provoquant la déformation / la rupture de la zone A du corps de biellette : le dispositif de fixation 7 poursuit son chemin dans le corps de bielle et vient rompre les évidements de la zone A du corps les uns après les autres. On voit ainsi, que, même après un choc violent, le corps ne se déforme pas, ou ne se déforme que localement dans la zone A, de façon contrôlée.

La figure 4a est un autre mode de réalisation de l'insert : l'insert 4' comprend, toutes choses égales par ailleurs par rapport à l'insert 4, le logement 48 comme précédemment, et une zone de rupture progressive sous forme de croisillons 41' qui se croisent ici au niveau de l'axe X-X. En cas de choc, le dispositif de fixation 7 va se déplacer selon l'axe X-X et briser les croisillons les uns après les autres.

La figure 4b représente encore un autre mode de réalisation de l'insert : l'insert 4" comprend une série d'évidements cylindriques sur la hauteur de l'insert (selon l'axe Z-Z) qui s'intersectent et qui sont disposés alternativement de part et d'autre de l'axe X-X pour former des sortes de chicanes. Là encore, en cas de choc, le dispositif 7 va se déplacer selon l'axe X-X et rompre progressivement les parois de ces évidements cylindriques formant chicanes.

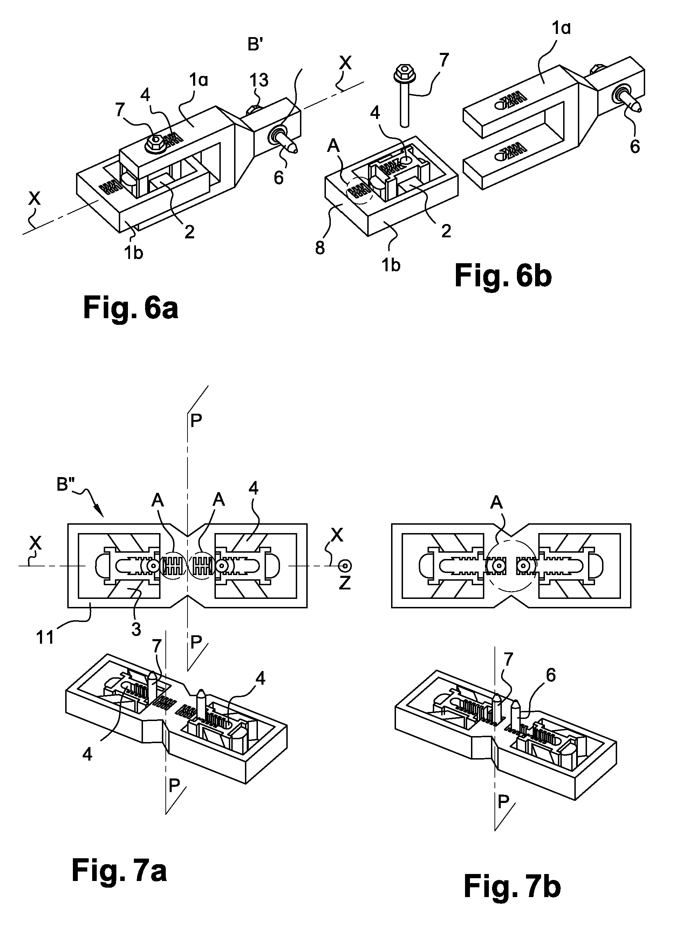

La figure 6 est une représentation très schématique de l'effort appliqué entre les dispositifs de fixation 6 et 7 lors d'un choc longitudinal en fonction de la variation de la distance entre ceux-ci, quand on a une rupture programmée de l'insert comme représenté en figure 5b : on constate que le niveau d'effort nécessaire pour dissiper l'énergie du choc est abaissé par rapport à une rupture brutale et est maintenu dans une plage (grisée à la figure) de compressibilité, ce qui est très favorable.

Les figures 6a-6b représentent, respectivement en perspective et en éclaté, une variante de biellette B' selon l'invention, où le corps est décomposé en deux parties : il comprend la partie 1 a en forme de mâchoire (qu'on peut aussi désigner par « chape ») et dont la partie terminale comprend le logement de réception du dispositif de fixation 6, et la partie 1 b de forme substantiellement parallélépipédique et qui comprend l'insert 4 et la zone de fragilisation A optionnelle, à la manière du corps 1 de l'exemple précédent. Les deux parties 1a et 1b sont fixées l'une à l'autre par le dispositif 7 de fixation, qui vient traverser la mâchoire de la partie 1a et l'insert 4 de la partie 1b. La référence 5 est une articulation, qui peut être surmoulée ou emmanchée, qui vient délimiter dans le corps le logement de réception du dispositif de fixation. Elle peut aussi être prévue dans l'ensemble des exemples de biellette du présent texte pour l'ensemble des logements de réception.

Les figures 7a, 7b représentent encore un autre exemple B" de biellette selon l'invention, avant choc (figure 7a) et après choc (figure 7b). Dans cet exemple, al biellette B" est dédoublée, soit de façon parfaitement symétrique, comme cela est représenté, soit de façon non symétrique. Ici, on voit qu'il y a une symétrie selon le plan P, avec un corps de bielle dédoublé 10,11, avec chacun des demi-corps 10,11 muni d'un évidement et d'un insert 4 avec son logement de réception d'un dispositif de fixation 7 d'un côté, 6 de l'autre. Dans ce cas de figure, les deux logements de réception se trouvent chacun dans un insert, et les deux dispositifs de fixation sont parallèles entre eux selon l'axe Z-Z. En variante, les deux dispositifs de fixation peuvent être perpendiculaires l'un par rapport à l'autre. Et en regard de chacun des logements est prévue dans chaque demi-corps une zone de rupture programmée A (elle reste optionnelle).

La figure 7a représente la biellette dédoublée après un choc longitudinal de niveau donné : les deux dispositifs 6,7 se sont rapprochés, en rompant progressivement les évidements transversaux des deux inserts 4, et les deux demi-corps 10,11 ne sont pas endommagés.

La figure 7b représente la biellette après un choc longitudinal plus élevé : ici, le choc a été suffisamment violent pour que les dispositifs 6,7 poursuivent leur déplacement dans les zones A des deux demi-corps et qu'ils s'y arrêtent.

## Revendications

1. Biellette de liaison (B,B',B") entre deux organes mobiles l'un par rapport à l'autre, en particulier entre un groupe motopropulseur et une caisse d'un véhicule automobile, cette biellette comprenant un corps (1,1 a,1 b) présentant un évidement dans lequel est disposé un insert (4,4',4") d'articulation relié audit corps par au moins une liaison élastique (2,3), le corps étant muni d'un premier logement (13) de réception d'un dispositif de fixation (6) destiné à être solidarisé à l'un des organes mobiles, et l'insert (4) étant muni d'un deuxième logement (48) de réception d'un autre dispositif de fixation destiné à être solidarisé au deuxième organe mobile, **caractérisé en ce que** l'insert (4) présente une structure propre à se rompre progressivement lors de l'application d'un effort de compression de la biellette conduisant à un rapprochement des deux logements (48,13) avant rupture éventuelle du corps.

2. Biellette (B, B', B") selon la revendication précédente, **caractérisée en ce que** le corps (1,1a, 1b) présente un axe longitudinal (X-X), et **en ce que** l'insert (4) est disposé selon cet axe longitudinal et présente au moins un évidement transversal (49a, 49b, 49c, 49d), notamment non traversant, disposé substantiellement transversalement audit axe longitudinal.

3. Biellette (B, B', B") selon la revendication précédente, **caractérisée en ce que** l'insert présente au moins deux, notamment au moins trois évidements transversaux.

4. Biellette (B, B', B") selon la revendication précédente, **caractérisée en ce que** les évidements transversaux de l'insert sont traversants ou non traversants.

5. Biellette (B, B', B") selon la revendication 3 ou la revendication 4, caractérisée en ce les évidements transversaux de l'insert débouchent les uns dans les autres ou sont séparés les uns des autres par des cloisons.

6. Biellette (B, B', B") selon la revendication précédente, **caractérisé en ce que** le ou les évidements transversaux (49a, 49b, 49c, 49d) sont centrés sur l'axe longitudinal (X-X) du corps et en regard du deuxième logement (48) de réception du deuxième dispositif de fixation également centré sur l'axe longitudinal du corps.

7. Biellette (B, B', B") selon la revendication précédente, **caractérisée en ce que** l'insert (4) présente une pluralité d'évidements transversaux (49a, 49b, 49c, 49d), notamment non traversants, disposés substantiellement transversalement à l'axe longitudinal (X-X) du corps, les évidements étant traversés par un évidement longitudinal (49 e) disposé selon l'axe longitudinal du corps (1).

8. Biellette (B, B', B") selon la revendication précédente, **caractérisée en ce que** l'évidement longitudinal (49 e), notamment non traversant, se prolonge à l'une de ses extrémités pour déboucher dans le deuxième logement (48) de réception du deuxième dispositif de fixation (7).

9. Biellette (B,B',B") selon la revendication 1, **caractérisée en ce que** l'insert (4") présente des évidements traversants sur la hauteur de l'insert (4"), qui sont jointifs et disposés en chicane les uns par rapport aux autres, notamment en regard du deuxième logement de réception (48) du deuxième dispositif de fixation (7) centré sur l'axe longitudinal (X-X) du corps.

10. Biellette (B,B',B") selon la revendication 1, **caractérisée en ce que** l'insert (4') présente des évidements traversants sur la hauteur de l'insert, formant entre eux des croisillons (41'), notamment en regard du deuxième logement de réception (48) du deuxième dispositif de fixation (7) centré sur l'axe longitudinal du corps (X-X).

11. Biellette (B, B', B") selon l'une des revendications précédentes, **caractérisée en ce que** l'insert (4, 4',4") présente, à au moins une de ses extrémités longitudinales, un profil présentant deux pieds saillants (41, 42) selon l'axe longitudinal du corps (1) et délimitent entre eux une zone de retrait (46,47) accueillant éventuellement une butée (b1, b2).

12. Biellette (B,B',B") selon la revendication précédente, **caractérisée en ce que** le corps de la biellette (1,1a) comprend également au moins une zone (A) propre à se rompre progressivement lors de l'application d'un effort de compression, qui est localisée en regard d'au moins une extrémité longitudinale de l'insert (4), et qui s'étend uniquement en regard de la zone en retrait (46,47) de l'insert accueillant la butée (b1,b2) sur une largeur mesurée transversalement à l'axe longitudinal (X-X) du corps qui est inférieure à la largeur de ladite zone en retrait.

13. Biellette (B,B',B") selon l'une des revendications précédentes, **caractérisée en ce que** le corps de biellette comprend deux composants (1a,1b), le premier composant étant muni d'un premier logement de réception (13) d'un dispositif de fixation destiné à être solidarisé à l'un des organes mobiles et comprenant une forme en mâchoire dans l'entrefer de laquelle est monté le second composant (1 b) présentant un évidement dans lequel est disposé l'insert (4) d'articulation relié au corps du second composant par au moins une liaison élastique (2,3), l'insert étant muni du deuxième logement (48) de réception de l'autre dispositif (7) de fixation destiné à être solidarisé au deuxième organe mobile.

14. Biellette (B") selon l'une des revendications précédentes, **caractérisée en ce qu'**elle comprend un corps (10,11) présentant deux évidements, un insert (4) étant disposé dans chacun des évidements, les deux inserts (4) étant en regard l'un de l'autre, l'un des inserts insert étant muni du premier logement de réception du dispositif de fixation (6) destiné à être solidarisé à l'un des organes mobiles, et l'autre insert étant muni du deuxième logement de réception d'un autre dispositif de fixation destiné à être solidarisé au deuxième organe mobile.
